(19) Europäisches Patentamt
European Patent Office
Office européen des brevets

(11) **EP 3 245 542 B1**

(12) ## EUROPEAN PATENT SPECIFICATION

(45) Date of publication and mention
of the grant of the patent:
**03.11.2021 Bulletin 2021/44**

(21) Application number: **16702270.6**

(22) Date of filing: **13.01.2016**

(51) Int Cl.:
***G01V 1/36*** *(2006.01)*

(86) International application number:
**PCT/US2016/013184**

(87) International publication number:
**WO 2016/115216 (21.07.2016 Gazette 2016/29)**

(54) **STACK GHOST SUPPRESSION**

STACK-GHOST-UNTERDRÜCKUNG

SUPPRESSION DES TRACES FANTÔMES DE SOMMATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.01.2015 US 201562102835 P**

(43) Date of publication of application:
**22.11.2017 Bulletin 2017/47**

(73) Proprietor: **BP Corporation North America Inc.
Houston, TX 77079 (US)**

(72) Inventor: **MOSELEY, Benjamin
Naperville, IL 60563 (US)**

(74) Representative: **Hamer, Christopher K. et al
Mathys & Squire
The Shard
32 London Bridge Street
London SE1 9SG (GB)**

(56) References cited:
**WO-A1-2014/159839      WO-A2-2012/154294
US-A1- 2006 227 659**

• **Òscar Calderón Agudo: "Seismic source
deghosting, Application to the Delta 3 source
array", , 8 August 2014 (2014-08-08),
XP055264642, Retrieved from the Internet:
URL:http://www.tudelft.nl/fileadmin/Files/
tudelft/studeren/master/CE/Graduation_Summ
aries/Applied_Geophysics/Seismic_source_de
ghosting_Oscar_Calderon_Agudo.pdf [retrieved
on 2016-04-12]**

**Description**

<u>Field of the Invention</u>

The present invention pertains to seismic exploration and, more particularly, to a technique for use in improving seismic data quality.

<u>Background of the Invention</u>

The search for hydrocarbon deposits such as oil and natural gas is known in the art as "seismic exploration". A part of seismic exploration is the seismic survey through which data representative of a subterranean formation is acquired. A seismic signal is imparted through the environment into the subterranean formation. The seismic signal's propagation through the subterranean formation alters the signal in a variety of ways before the signal is returned to the surface. These alterations are caused by the nature of the seismic signal and its interactions with various structural features of the subterranean formation.

At the surface, the returned signal is recorded so that it can later be imaged and analyzed. Through knowledge of the original seismic signal, the structure of the seismic survey, and the time of receipt, seismologists can reconstruct from the returned signal what happened to the original seismic signal on its travels. They can then infer the structure of the subterranean formation, which is then analyzed for indications of likely hydrocarbon deposits.

The quality of the analysis is affected by the quality of the seismic data. There may be many sources of error in the data, some of which are dependent on the type of survey used to acquire it. For example, marine seismic surveys are those taken in the water. The term "marine" does not necessarily imply that the water is saltwater. Marine seismic surveys may be performed not only in saltwater, but also fresh water and brackish water. Marine seismic surveys suffer from a phenomenon known as "ghost reflections" that cause some data to be canceled from the record of the survey.

More particularly, in a marine seismic survey, a vessel tows a seismic source through the water. The seismic source imparts a seismic signal downward into the water column toward the ground beneath. However, a part of the signal also propagates upward through the water column and upon arrival is reflected downwards by the water surface. This reflection is called a "ghost reflection" of the seismic signal because as it propagates downward after reflection it, too, will enter the ground, propagate through the subterranean formation, and be returned back to the seismic receivers a short time after the first arrival of the primary seismic signal. That is, it is a ghost of the primary seismic signal.

One type of marine seismic survey is called a "towed array" survey because a vessel tows an array of seismic receivers behind the vessel. As reflections of the seismic signal and its ghost pass over the receivers they sense and record the reflections. However, as the seismic wavefront travels past the receivers it will continue propagating upwards until it reaches the waters surface, whereupon it is reflected downward. As it passes over the receivers in the downward direction, it is recorded again even though it does not contain desirable information. This downward reflection of the returned signal is also called a "ghost reflection" because it is a ghost of the returned signal that is desirable to record.

The ghost of the seismic signal is referred to as the "source side" ghost reflection and the ghost of the seismic signal's reflection is called the "receiver side" ghost in order to distinguish the two. However, both of them are considered undesirable because of the effect they have on the seismic record. At certain signal frequencies, they destructively interfere with the primary signals that are desirable to record. When this happens, the record shows a "notch" in the frequency spectrum where useful data should be recorded. This is referred to as the "ghost notch" in the record and can occur at several different frequencies, including both a low frequency notch and higher order notch frequencies.

In this context, a record exhibiting ghost notches is referred to as "narrowband" and a record in which the ghost notch has been mitigated is referred to as "broadband". It is desirable to improve the quality of seismic data by removing the ghost effect. One such way to mitigate this effect is to change the acquisition design of the seismic survey. For example, most marine seismic surveys tow the seismic source at a depth of about 9m. Towed arrays are also typically towed at a depth of about 9m. That is because at shallower tow depths the higher-frequency related ghost notches occur at frequencies higher than those typically used when imaging a seismic survey. However, destructive interference in the low frequency notch still remains.

Note that the above discussion generally contemplates the occurrence of ghost reflections in the context of what are known in the art as towed-array surveys. However, ghost reflections result from the water surface reflection rather than the manner of acquisition. Ghost reflections are therefore generally found in almost any marine seismic survey regardless of whether it is a towed-array survey, an ocean bottom survey, a marine vertical seismic profiling survey, or any other kind of marine seismic survey.

Much current interest in the field of broadband marine seismic surveying is toward employing seismic processing solutions to attenuate the effect of the sea surface ghost (both receiver side and source side) instead of changing survey acquisition design. The underlying criterion for such a technique is that recoverable signal is still recorded within the low and high frequency notches in the seismic spectrum, despite the ghost destructively interfering at these frequencies.

Indeed, with the advance of modern hydrophone receivers, it is becoming possible to reduce the noise floor below these low amplitude levels.

To remove or attenuate the effects of a ghost reflection via processing, the theoretical form of the de-ghosting operator in one-dimension ("1D") is given by:

$$D(\omega) = \frac{1}{1 + re^{-2iz\omega/c}} \qquad (1)$$

where r is the water surface reflection coefficient typically close to -1, $z$ is the depth of the receiver or source, c is the surface water velocity and $\omega$ is the angular frequency of the seismic signal. The ghost notch frequency, $f_n$, is given as

$$f_n = \frac{nc}{2z} \qquad (2)$$

where $n$ = 0, 1, 2, ..., $\infty$ is the integer harmonic number of the notch.

One of the stumbling blocks to applying the operator in Eq. (1) in practice is ensuring its stable application. For a value of r =-1, which is the value assigned in traditional practice, it can be seen that $D$ exhibits a singularity in its amplitude component at the notch frequency. Furthermore, there is a discontinuous phase flip of 180' of the ghost at the location of the high frequency notches $f_1$, $f_2$,... which, especially if the notch frequency is not precisely known, is difficult to predict and remove in a stable way.

Furthermore, current industry focus is towards application of this operator in the pre-stack seismic domain where the two and three-dimensional ("2D", "3D") nature of the ghost can be separated and corrected for. For example, the effect whereby the notch frequency changes with the angle of incidence of a primary arrival is otherwise known as "notch diversity" and is strongly present even for a flat towed streamer. Further terms should be added to Eq. (1) in order to account for these effects.

There are consequently several approaches to mitigating the undesirable effects of ghost signals on the seismic record. Some, such as the one discussed immediately above, are implemented during processing. Some of these approaches take place during acquisition. Even though these approaches may achieve suitable results in at least certain contexts, the art is always receptive to new approaches to address the adverse effects of ghost reflections in the seismic survey.

US2006/0227659 describes a method and apparatus for wave field separation. The method includes determining a first operator using marine seismic data acquired at a first depth and receivers deployed at a second depth, determining a second operator using marine seismic data acquired at a second depth, wherein the second depth is greater than the first depth, and forming a de-ghosted set from the marine seismic data set based upon the first and second operators.

WO2012/154294 describes a method for marine seismic acquisition using both monopole and dipole source types. Through a combination of source design and operation and/or combination or summing of the data in a processing step, the source ghost is either attenuated or, if desired, enhanced.

## BRIEF DESCRIPTION OF THE DRAWINGS

The accompanying drawings, which are incorporated in and constitute a part of this specification, illustrate embodiments of the invention and together with the description, serve to explain the principles of the invention. In the figures:

Figure 1 illustrates one particular embodiment of a method performed in accordance with one aspect of the technique disclosed herein.

Figure 2 illustrates the suppression of the ghost effect in a seismic data sample using the method of Figure 1.

Figure 3A and Figure 38 illustrate the effect of separately controlling the amplitude and phase of a ghost reflection in an exemplary seismic record.

Figure 4 depicts an exemplary acquisition for the seismic data in one particular embodiment

Figure 5 illustrates with more particularity the nature of the ghost response in the frequency domain, and shows the effect of the sea-surface ghost on a minimum phase stacked seismic trace, for a source (or receiver) depth of 9m.

Figure 6 depicts selected portions of the hardware and software architecture of an exemplary computing apparatus on which that aspect of the presently disclosed technique shown in Figure 1 and Figure 2 may be performed.

Figure 7 illustrates one particular embodiment of the computing apparatus of Figure 6 which is, more particularly, a computing system on which some aspects of the present invention may be practiced in some embodiments.
Figure 8 illustrates a process flow in one particular embodiment of the presently disclosed technique.
Figure 9 depicts the effect of the de-ghosting on an input spectrum using a technique known to the art.
Figure 10 illustrates the process of fitting the notch frequency.
Figure 11 illustrates the process of fitting the amplitude ghost reflection coefficient for amplitude correction.
Figure 12 illustrates the impact of suppressing the source side ghost reflection effects and then the effects of both the source side and receiver side ghost reflections.

## DESCRIPTION OF THE EMBODIMENTS

Broadband processing offers considerable time and cost savings compared to changing the survey acquisition design. In this context, "broadband processing" is processing that attempts to remove the sea-surface related ghost via processing marine seismic data. Whilst most current approaches are in the pre-stack seismic domain, a post-stack seismic domain method for de-ghosting would allow a simple and efficient resolution improvement, particularly for legacy datasets, where pre-stack seismic data is not available. The presently disclosed technique offers broadband processing that can be used in the post-stack domain with a 1D model-based approach that may be called Stack Ghost Suppression ("SGS").

The SGS workflow modifies the form of the one-dimensional ("1D") de-ghosting operator and applies this as a filter on a set of stacked marine seismic data. In this particular embodiment, the model can be expressed as Eq. (3):

$$D_{SGS}(\omega) = \left| D\big(\omega, r = r_{amp}\big) \right| e^{i \arg\{D(\omega, r = r_{ph})\}} \tag{3}$$

where $r_{amp}$ and $r_{ph}$, termed the amplitude ghost reflection coefficient and the phase ghost reflection coefficient respectively, and the notch frequency, $f_n$, are free parameters in the workflow and can be set independently. Note that the amplitude and phase components are separated across two separate values rather than being aggregated together as in Eq. (1).

This operator aims to address the main stability issues of the theoretical broadband operator described above relative to Eq. (1) and Eq. (2). First the amplitude and phase components of the operator in Eq. (3) are separated. The value of $r_{amp}$ is then typically restricted to a value higher than -1. Restricting $r_{amp}$ to a value higher than -1 restores the continuity of the amplitude correction of the operator in Eq. (1) and adjusting $r_{amp}$ allows its strength to be reduced until a stable correction is found. The strength and stability of the phase correction can then be independently set using the value of $r_{ph}$. By separating the two components, their separate corrections can be controlled individually. We also allow flexibility on the choice of $f_n$, which can be adjusted deterministically to give us further control on the operator.

Some embodiments will modify the technique as disclosed above to account for "notch diversity", which is an observed condition in which the notch frequency may vary in the pre-stacked seismic traces. To do so, Eq. (1) is modified to sum together many 1D operators with a distribution of notch frequencies to produce a final 1D operator that accounts for some degree of notch frequency variation:

$$D'(\omega) = \frac{N}{N + \sum_a r e^{-\frac{i\omega}{f_a}}} \tag{4}$$

where $D'$ can be shown using Eq. (1) to be the averaged de-ghosting operator used to remove the ghost response from $N$ stacked traces with individual notch frequencies $f_a$. Substituting Eq. (4) into Eq. (3) yields:

$$D'_{SGS}(\omega) = \left| \frac{N}{N + \sum_a r_{amp} e^{-\frac{i\omega}{f_a}}} \right| e^{i \arg\left\{ \frac{N}{N + \sum_a r_{ph} e^{-\frac{i\omega}{f_a}}} \right\}} \tag{5}$$

In the SGS workflow the $f_a$ values can be chosen to best match the observed pre-stack ghost response, or be statistically chosen. In the embodiment disclosed herein, the value of $f_a$ is statistically given by:

$$f_a = f_n + \frac{ad}{100}, a \in [-50, -49, \ldots, 49, 50], N = 101, \tag{6}$$

where $f_n$ is the central notch frequency and $d$ is termed the notch diversity. It can be seen that in this embodiment the notch frequency is assumed to vary uniformly around a central notch frequency $f_n$ within the range $f_n \pm d/2$.

Note, however, that the technique is not so limited. Eq. (6) is but one definition and other definitions may be used in alternative embodiments. Some embodiments may not use a mathematical definition. The frequencies may be, for example, manually identified from the data. Still other approaches may become apparent to those skilled in the art having the benefit of this disclosure.

One feature of the presently disclosed technique is the degree of control provided in the design of the filter. As noted above, the ghost reflection coefficients $r_{amp}$ and $r_{ph}$ and the ghost reflection frequency, $f_n$, can be set independently. Some embodiments therefore iterate the filter design process using various permutations of values for one or more of the ghost reflection coefficients $r_{amp}$ and $r_{ph}$ and the ghost reflection frequency, $f_n$. Some embodiments may iterate on multiple values for only one of the three, some for only two of the variables, and some for all three.

Those of skill in the art know that the sea surface reflectivity coefficient can be observed to vary depending on the frequency of the incident seismic wave. Since seismic data will consist of a range of different frequency components it may be desirable in some embodiments to choose a frequency dependent function to represent both or one of $r_{amp}$ and $r_{ph}$. This function might take any form to appropriately represent the theoretical or estimated coefficient variation. The presently disclosed technique also contemplates the use of ghost reflection coefficients that are neither 1 nor -1 in some embodiments. Those in the art having the benefit of this disclosure will appreciate that techniques known to the art assign the water reflectivity coefficient a value of 1 or -1 depending on the direction of travel for the wave and the reflection. However, the currently disclosed technique contemplates any value between -1 and 0 inclusive for most embodiments.

This technique can also be used to suppress the effects of either the receiver side ghost or the source side ghost, and in some embodiments both.

And in still another aspect, the technique can in some embodiments accommodate notch diversity. In the context of this disclosure, "accommodate notch diversity" means that the filter can be or has been modified to incorporate any notch diversity that might be found in the marine seismic data upon which the process is operating.

Note that not all embodiments will necessarily exhibit all of these aspects. The ability to accommodate notch diversity may, for example, be omitted from some embodiments. Furthermore, to the extent that any given embodiment might manifest more than one of these aspects, they might be manifested to different degrees. For another example, the technique may be employed in some embodiments to suppress the effect of only one of the receiver side and the source side ghost but in others it may be employed to suppress the effects of both.

Reference will now be made in detail to the present embodiments) (exemplary embodiments) of the invention, an example(s) of which is (are) illustrated in the accompanying drawings. Wherever possible, the same reference numbers will be used throughout the drawings to refer to the same or like parts.

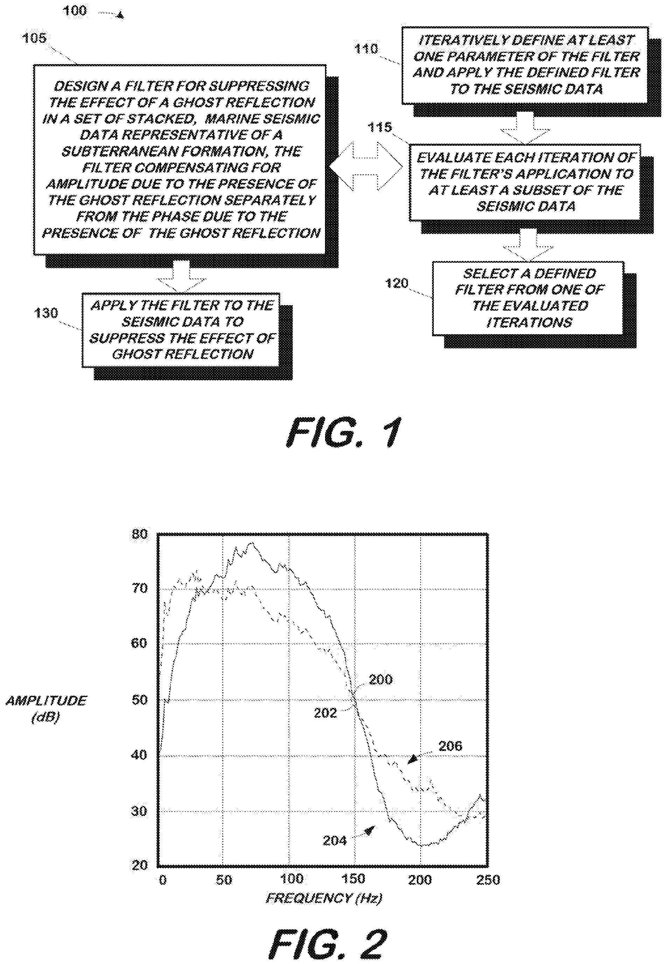

So, turning now to Figure 1, the method 100 of one particular embodiment of the presently disclosed technique is charted. The method is for use in, among other things, imaging seismic data. As those in the art will appreciate, seismic data are representative of physical and tangible real-world objects—namely, the structure of a subterranean formation. The end use of the seismic data permits those skilled in the art to examine that structure indirectly where they cannot examine it directly. However, end uses are not limited to imaging.

The method 100 begins with designing (at 105) a filter for suppressing the effect of a ghost reflection in a set of stacked, marine seismic data. Ordinarily, this marine seismic data will be in the minimum phase seismic domain, but in some embodiments may be in the zero phase seismic domain. The filter is the model as described above into which selected values for one or more of the parameters $r_{amp}$, $r_{ph}$, and $f_n$ have been assigned. The filter compensates for amplitude due to the presence of the ghost reflection separately from the phase due to the presence of the ghost reflection as is described above.

The design process is iterative. More particularly, it includes iteratively defining (at 110) at least one parameter of the filter and applying the defined filter to at least a subset of the seismic data. Those in the art will appreciate that all three of the parameters $r_{amp}$, $r_{ph}$, and $f_n$ must have an assigned value. However, the technique contemplates that in some embodiments, the value for only one of three may be iteratively defined while the other two remain constant during the iterations. Those parameters will therefore not be set iteratively but will, instead, be set once for all iterations. Also as discussed above, various alternative embodiments may in fact define more than one of the parameters, and even all three, for use in multiple iterations.

Each iteration will typically be performed on a small subset of the seismic data containing the effects of the ghost reflection rather than the entire seismic data set. In the art, this subset is sometimes referred to as a "window", or occurring in a "window", of the seismic dataset. Those in the art will appreciate that a set of seismic data are voluminous and that to perform multiple iterations on the entire set to test a filter design will generally be considered too expensive in terms of computing resources. It is therefore contemplated that the iterations will be performed on only a subset of the entire seismic data set. However, since the purpose is to evaluate the efficacy of the filter in suppressing the effects of the ghost reflection, the subset selected should exhibit such effects.

The designing exercise then evaluates (at 115) each iteration of the filter's application to at least a subset of the seismic data. The evaluation of any given iteration may be performed before the next iteration or the results of each application may be saved so that all the iterations may be evaluated at the same time after multiple iterations have been performed. The evaluation is an assessment of how well the filter in any given iteration suppresses the effect of the ghost reflection. The assessment may be, for example, an automated statistical analysis or, for another example, a subjective evaluation by a person.

The design process then selects (at 120) a defined filter from one of the evaluated iterations. The selection may result from a person's subjective evaluation of which filter produces the "best" results. Alternatively, the selection may result from some statistical analysis as to what is a "best fit" coupled with a set of predefined criteria defining the best fit.

Once the filter is designed (at 105), the filter is applied (at 130) to the seismic data to suppress the effect of ghost reflection. At this point the filter is applied across the entire seismic data set. The manner in which it is applied will depend to some degree on the nature of the filter being applied. In this case, using the filters described above, the filter is applied by convolving it trace-by-trace across the entire seismic dataset.

Figure 2 illustrates the effect of suppressing the effect of the ghost reflection using the present technique. Figure 2 includes two spectra 200, 202 that represent the unfiltered and the filtered seismic data, respectively. There is a noticeable notch at 0 Hz, which is known as the 0 Hz notch. Note the filter at zero does not suppress the effect of the ghost reflection at 0 Hz because the seismic source does not emit signal in this frequency range.). But, as the frequency moves away from 0 Hz the compensation improves and quickly suppresses the effect of the zero notch. Thus, the technique works across all frequencies.

There is also a second noticeable notch 204 from about 150 Hz to about 240 Hz in the unfiltered curve 200. This notch 204 is comprised of a source notch at 190 Hz and a receiver notch at 220 Hz that are not separately distinguishable in this graph. Those in the art having the benefit of this disclosure will appreciate that the notch 204 represents a physical, real world phenomenon in which the ghost reflection destructively interferes with a primary reflection. The primary reflection is the signal of interest and that contains the information representative of the subterranean formation. The application of the filter, however, results in a portion 206 of the filtered curve 202 that emulates the seismic data that would have been acquired in the absence of the ghost reflection. That is, the effect of the ghost reflection has been suppressed in the filtered curve 202.

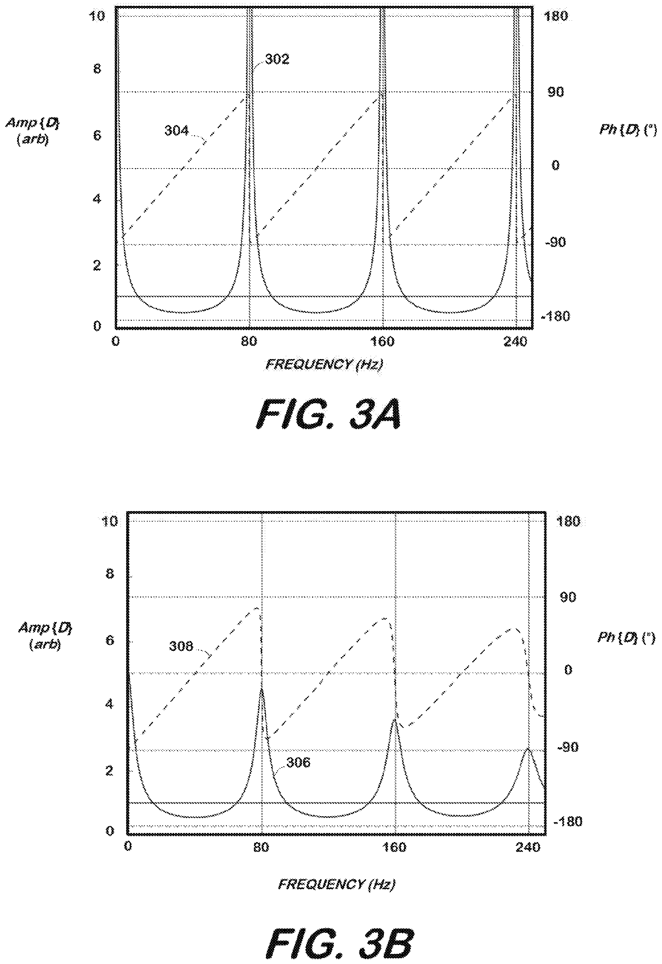

As mentioned above, one aspect of the presently disclosed technique is that it can control the amplitude and phase of the ghost reflection in the filter design separately. Figure 3A and Figure 3B illustrate this separate control. Figure 3A plots the amplitude 302 and the phase 304 of a filter obtained using Eq. (1), which is a filter known to the art. Figure 3B plots the amplitude 306 and the phase 308 of a filter obtained using Eq. (3). The notch frequency is 80 Hz, $r$= -1 in Figure 3A and the SGS filter in Figure 3B is defined with $r_{amp}$=-0.8, $r_{ph.}$=-1, a central notch frequency of 80 Hz and $d$=10 Hz.

The theoretical, known, 1D de-ghosting operator used in Figure 3A is difficult to apply in practice as it exhibits, as discussed above, instability in the amplitude component at the notch frequency. Furthermore the 2D and 3D effects of notch diversity, which are present in a stacked image, act to reduce the depth and widen the notch and smooth the phase flip across the notch frequency. The post-stack SGS operator used in Figure 3B achieves stability by both accounting for notch diversity and allowing the user to separately reduce and vary the strength of the amplitude and phase corrections in the 1D operator design.

To further an understanding of the technique disclosed and claimed herein, one particular embodiment will now be disclosed. Those in the art will appreciate that the technique described herein is only a part of a much larger effort. This effort stretches from acquisition of the seismic data through its pre-processing and processing to the analysis of the processed data.

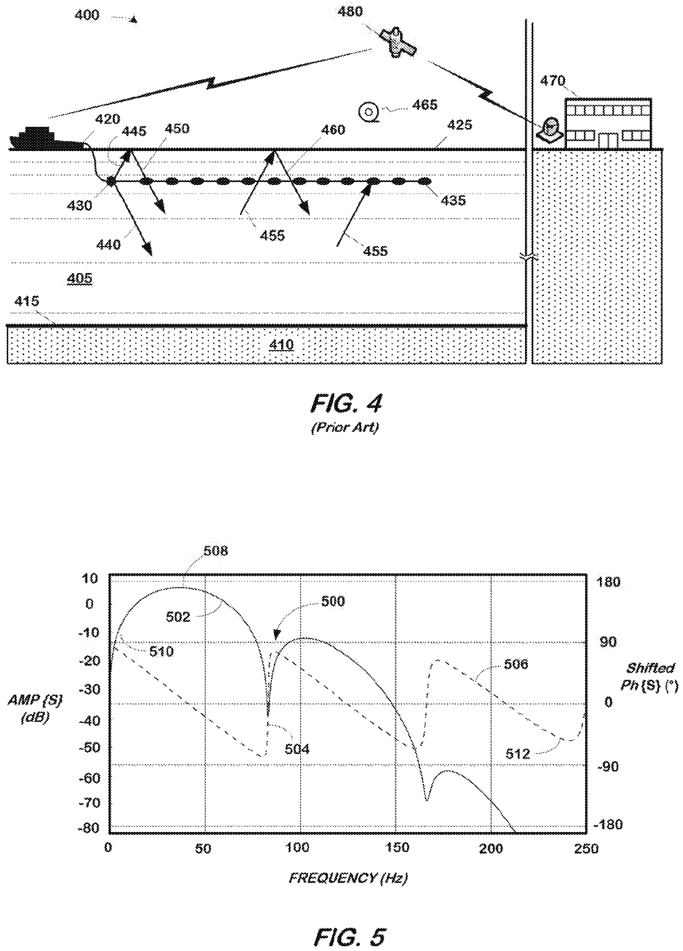

Figure 4 illustrates a towed array, marine seismic survey 400 such as is known to the art and is suitable for acquiring the seismic data with which the presently disclosed technique may be used. In some embodiments, a seismic survey will be conducted in the ocean 405 over a subsurface geological formation of interest 410 which lies beneath the seafloor 415. A vessel 420 sails on the ocean surface 425 and tows a seismic source 430 such as is known to the art and a plurality of receivers 435 (only one indicated).

Many variations of this acquisition system are possible and well within the ability of one of ordinary skill in the art to devise. The presently disclosed technique may be used with any seismic data set in which the effects of the ghost reflection may be found. This approach can be applied to seismic data acquired with almost any type/design/geometry for a marine seismic survey design, with a wide variety of receiver and source configuration.

This would include, for example, towed-array surveys with sources and receivers at any depth or combination of depths below mean sea level ("MSL"); ocean bottom cable ("OBC") surveys; ocean bottom surveys ("OBS") (e.g.,

using nodes *etc*.); vertical seismic profile ("VSP") surveys, as well as others, so long as there is the possibility of a reflection off a sea-surface. The instant survey system therefore could be acquiring 2D, 3D, or 4D data, for example.

Accordingly, variations in the design of the spread or the number of vessels will also be readily appreciated by those skilled in the art having the benefit of this disclosure. The receivers 435 may be deployed to the seafloor 415 in some embodiments, for example. Various numbers and types of seismic sources 430 may be used. The technique admits wide variation in the acquisition of the marine seismic data and the embodiment of Figure 4 is merely illustrative.

Figure 4 also illustrates the nature of the "ghost reflection" on both the source and receiver sides. When the seismic source 430 imparts a seismic signal 440 into the environment, a part 445 of the signal propagates upward toward the surface 425. The surface 425 reflects that part 445 back into the water column to create the source side ghost reflection 450. The ghost reflection 450 then behaves just as the portion 440 directed toward the seafloor 415. This includes the return to the receivers 435 and recordation as primary seismic signal when, in fact, it is not.

In a manner well known to the art, the seismic signal 440 is returned to the receivers 435. As the returned signal 455 passes over them, the receivers 435 record certain characteristics of the signals that are then considered seismic data. The returned signal 455, after passing over the receivers 435, propagates upward until it encounters the surface 425. The surface 425 reflects the returned signal 455 back into the water column, thereby creating the receiver ghost reflection 460. As the ghost reflection 460 passes over the receivers 435 it is again recorded as primary seismic signal when, again, it is not.

Figure 5 illustrates with more particularity the nature of the ghost response in the frequency domain, and shows the effect of the sea-surface ghost on a minimum phase stacked seismic trace, for a source (or receiver) depth of 9m. The sea-surface ghost introduces notches 500 into the amplitude spectrum 502. The first-order notch frequency is given by $f_n = \frac{c}{2z}$ where c is the shallow water velocity and $z$ is the depth of the source/receiver. It also alters the phase of the wavelet (at 504) by ramping the phase between 0 and $f_n$ and flipping it by (up to) 180° at the notch frequency in the phase spectrum 506. The amplitude spectrum 502 also shows the constructive interference (at 508) and the destructive interference (at 510) of the ghost reflection with the returned seismic signal.

Figure 5 also illustrates the effects of notch diversity (at, for example, 512). For stacked traces with a small amount of notch diversity (varying of the notch frequency), the observed depth of the notch reduces with frequency, the width of the notch increases and the phase spectrum becomes tapered and smooth across the notch. These effects can be observed for both the source and receiver ghosts, and in scenarios where both are present their effects combine on the amplitude and phase spectra.

Some embodiments will use the disclosed technique to suppress the effects of the source ghost reflection 450. Some embodiments will use the disclosed technique to suppress the effects of the receiver ghost reflection 460. And some embodiments will use the technique to suppress the effects of both the source ghost reflection 450 and the receiver ghost reflection 460. In the embodiment disclosed immediately below, the technique is used to suppress the effects of both.

Turning now from the acquisition and the excerpted material, the marine seismic data are recorded during acquisition and transported to a computing facility in any way known to the art. This typically includes recording the seismic data on some kind of electromagnetic medium, such as a magnetic tape 465 or a digital memory (not shown). The magnetic tape 465 may be transported by ground transportation (not shown), for example, to a computing facility 470. Or, the seismic data may be transmitted by satellite 480.

The computing facility 470 typically houses a more powerful computing system than what may be found on the vessel 410. The *situs* of the processing described herein is immaterial. In theory, the processing may be performed on the vessel 410 or, for that matter, anywhere else. However, the processing is computationally intensive and so more powerful computing systems than are typically found on survey vessels are generally desirable.

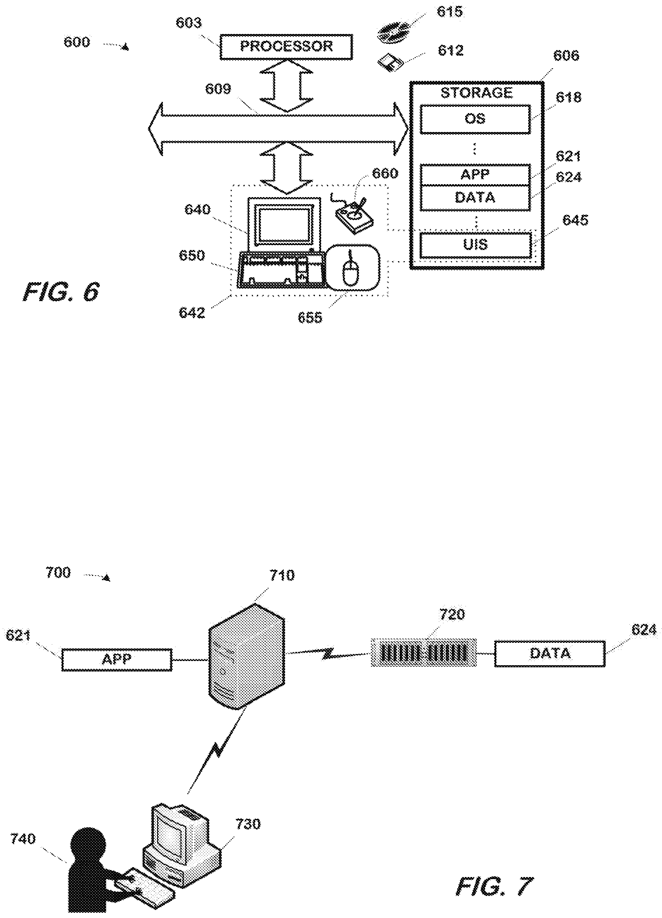

Those in the art having the benefit of this disclosure will appreciate that the presently disclosed technique described above is performed with the assistance of a computing apparatus. Figure 6 conceptually depicts selected portions of the hardware and software architecture of a computing apparatus 600 such as may be employed in some aspects of the present invention. The computing apparatus 600 includes a processor 603 communicating with storage 606 over a communication medium 609.

The processor 603 may be any suitable processor or processor set known to the art. Those in the art will appreciate that some types of processors will be preferred in various embodiments depending on familiar implementation-specific details. Factors such as processing power, speed, cost, and power consumption are commonly encountered in the design process and will be highly implementation specific. Because of their ubiquity in the art, such factors will be easily reconciled by those skilled in the art having the benefit of this disclosure.

Those in the art having the benefit of this disclosure will therefore appreciate that the processor 603 may theoretically be an electronic micro-controller, an electronic controller, an electronic microprocessor, an electronic processor set, or an appropriately programmed application specific integrated circuit ("ASIC"), field programmable gate array ("FPGA"), or graphical processing units ("GPUs"). Some embodiments may even use some combination of these processor types.

However, those in the art will also appreciate that marine seismic data sets are quite voluminous and that the processing described herein is computationally intensive. Typical implementations for the processor 603 therefore actually constitute multiple electronic processor sets spread across multiple computing apparatuses working in concert. One such embodiment is discussed below. These considerations affect the implementation of the storage 606 and the communication medium 609 similarly.

The storage 606 may include a hard disk and/or random access memory ("RAM") and/or removable storage such as a floppy magnetic disk 612 and an optical disk 615. The storage 606 is encoded with a number of software components. These components include an operating system ("OS") 618; an application 621; and a data structure 624 including the marine seismic data ("DATA"). The storage 606 may be distributed across multiple computing apparatuses as described above.

As with the processor 603, implementation-specific design constraints may influence the design of the storage 606 in any particular embodiment. For example, as noted above, the disclosed technique operates on voluminous data sets which will typically mitigate for various types of "mass" storage such as a redundant array of independent disks ("RAID"). Other types of mass storage are known to the art and may also be used in addition to or *in lieu* of a RAID. As with the processor 603, these kinds of factors are commonplace in the design process and those skilled in the art having the benefit of this disclosure will be able to readily balance them in light of their implementation specific design constraints.

The processor 603 operates under the control of the OS 618 and executes the application 621 over the communication medium 609. This process may be initiated automatically, for example upon startup, or upon user command. User command may be directly through a user interface. To that end, the computing system 600 of the illustrated embodiment also employs a user interface 642.

The user interface 642 includes user interface software ("UIS") 645 and a display 640. It may also include peripheral input/output ("I/O") devices such as a keypad or keyboard 650, a mouse 655, or a joystick 660. These will be implementation-specific details that are not germane to the presently disclosed technique. For example, some embodiments may forego peripheral I/O devices if the display 640 includes a touch screen. Accordingly, the presently disclosed technique admits wide variation in this aspect of the computing system 600 and any implementation known to the art may be used.

Furthermore, there is no requirement that the functionality of the computing system 600 described above be implemented as disclosed. For example, the application 621 may be implemented in some other kind of software component, such as a daemon or utility. The functionality of the application 621 need not be aggregated into a single component and may be distributed across two or more components. Similarly, the data structure 624 may be implemented using any suitable data structure known to the art.

As with the processor 603 and the storage 606, the implementation of the communications medium 609 will vary with the implementation. If the computing system 600 is deployed on a single computing apparatus, the communications medium 609 may be, for example, the bus system of that single computing apparatus. Or, if the computing system 600 is implemented across a plurality of networked computing apparatuses, then the communications medium 609 may include a wired or wireless link among multiple computing apparatuses. Thus, the implementation of the communications medium 609 will be highly dependent on the particular embodiment in ways that will be apparent to those skilled in the art having the benefit of this disclosure.

Some portions of the detailed descriptions herein are presented in terms of a software implemented process involving symbolic representations of operations on data bits within memory in a computing system or a computing device. These descriptions and representations are the means used by those in the art to most effectively convey the substance of their work to others skilled in the art. The process and operation require physical manipulations of physical quantities that will physically transform the particular machine or system on which the manipulations are performed or on which the results are stored. Usually, though not necessarily, these quantities take the form of electrical, magnetic, or optical signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated or otherwise as may be apparent, throughout the present disclosure, these descriptions refer to the action and processes of an electronic device, that manipulates and transforms data represented as physical (electronic, magnetic, or optical) quantities within some electronic device's storage into other data similarly represented as physical quantities within the storage, or in transmission or display devices. Exemplary of the terms denoting such a description are, without limitation, the terms "processing," "computing," "calculating," "determining," "displaying," and the like.

Furthermore, the execution of the software's functionality transforms the computing apparatus on which it is performed. For example, acquisition of data will physically alter the content of the storage, as will subsequent processing of that data. The physical alteration is a "physical transformation" in that it changes the physical state of the storage for the computing apparatus.

Note also that the software implemented aspects of the invention are typically encoded on some form of program storage medium or, alternatively, implemented over some type of transmission medium. The program storage medium may be magnetic (e.g., a floppy disk or a hard drive) or optical (e.g., a compact disk read only memory, or "CD ROM"), and may be read only or random access. Similarly, the transmission medium may be twisted wire pairs, coaxial cable, optical fiber, or some other suitable transmission medium known to the art. The invention is not limited by these aspects of any given implementation.

As alluded to above in several places, the computational demands of the presently disclosed technique are sufficiently demanding that it will ordinarily be performed on a powerful computing system comprised of multiple computing apparatuses. A portion of an exemplary computing system 700 is shown in Figure 7. The computing system 700 is networked, but there is no requirement that the computing system 700 be networked. Alternative embodiments may employ, for instance, a peer-to-peer architecture or some hybrid of a peer-to-peer and client/server architecture. The size and geographic scope of the computing system 700 is not material to the practice of the invention. The size and scope may range anywhere from just a few machines of a Local Area Network ("LAN") located in the same room to many hundreds or thousands of machines globally distributed in an enterprise computing system.

The computing system 700 comprises, in the illustrated portion, a server 710, a mass storage device 720, and a workstation 730. Each of these components may be implemented in their hardware in any suitable fashion known to the art. Alternative embodiments may also vary in the computing apparatuses used to implement the computing system 700. Those in the art will furthermore appreciate that the computing system 700, and even that portion of it that is shown, will be much more complex. However, such detail is well known and shall not be shown or discussed to avoid obscuring the subject matter claimed below.

In Figure 7, the application 621 is shown residing on the server 710 while the data structure 624 for the marine seismic data is shown residing in the mass storage 720. While this is one way to locate the various software components, the technique is not dependent upon such an arrangement. Although performance concerns may mitigate for certain locations in particular embodiments, the *situs* of the software components is otherwise immaterial.

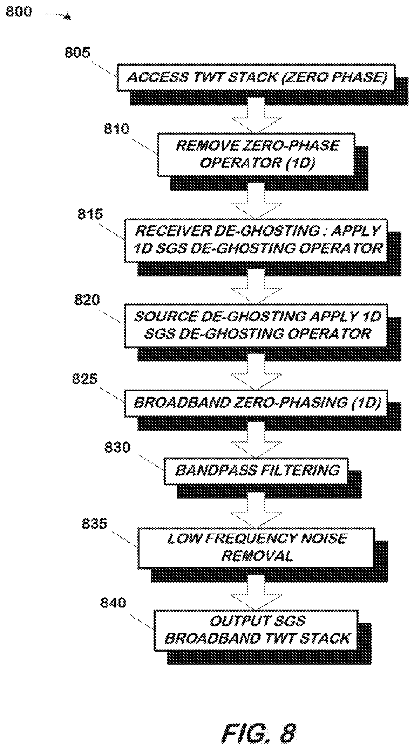

The user 740 invokes the application 621 from the workstation 730 to perform the particular workflow 800 shown in Figure 8. Those in the art will appreciate that the marine seismic data may undergo pre-processing to condition the data for the processing that is to come. Such pre-processing is described in, for example, U.S. Letters Patent 7,725,266 and U.S. Application Serial No. 13/327,524. The type and amount of pre-processing will vary by embodiment in a manner that will become apparent to those skilled in the art having the benefit of this disclosure.

Because of the ubiquity of such pre-processing, it is expected that the marine seismic data on which the disclosed process might operate will need some conditioning. In the illustrated embodiment, the marine seismic data are TWT (two-way time) stacked, zero-phase data and the workflow 800 begins by accessing it (at 805). However, the SGS technique is typically applied to minimum phase data, and so the zero-phase operator (1D) is first removed (at 810). (As mentioned above, some embodiments may operate on zero-phase data and so may omit this step as is discussed further below.) Note after the zero-phasing operator is removed all of the seismic energy occurs after time-zero.

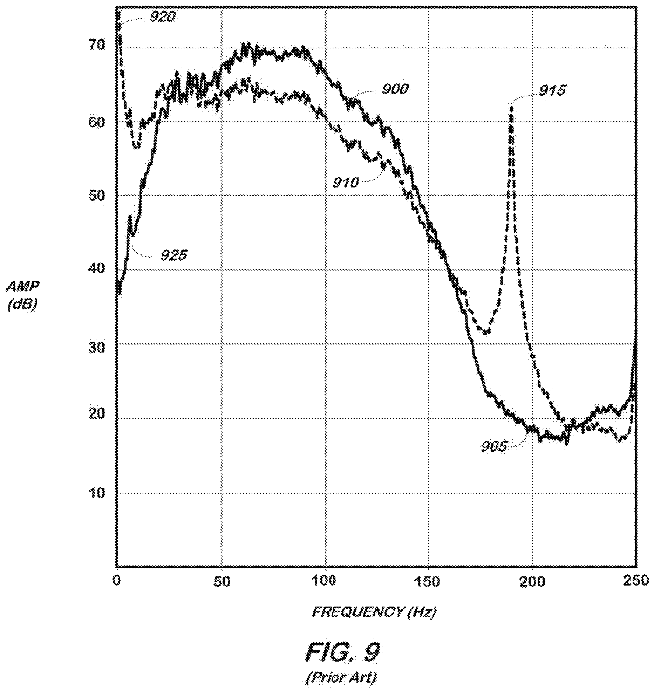

Once the marine seismic data are minimum phase, it is ready for full amplitude and phase de-ghosting using the SGS technique. The objective in this particular embodiment is to obtain a flat, broadband spectrum after de-ghosting. Figure 9 shows the input spectrum 900 of the minimum phase data to which the SGS technique will be applied in this particular embodiment. Note the source notch 905 at about 190 Hz. Figure 9 also shows an output spectrum 910 obtained using a filter represented by the Eq. (1) in the manner known to the art. Note the undesirable over-boosting 915 produced by the known de-ghosting technique at the source notch 905 and 920 at the low frequency notch 925.

In the minimum phase domain, the ghosts are separated from the primary wavelet. In this particular embodiment, the SGS technique is used to de-ghost both the receiver ghost (at 815) and the source ghost (at 820). Both of these begin with the design of the filter, which in this particular embodiment includes fitting the notch frequency to the data and then fitting the amplitude reflectivity.

To fit the notch frequency, the user 740 begins by defining an initial estimation of the notch frequency. The frequency in this embodiment is defined in Hz. Note it does not matter which order source/receiver de-ghosting is applied. The present example will attempt source de-ghosting first and initially estimate a notch frequency of $f_n$=1500ms$^{-1}$/(2×4m) = 190 Hz. The parameter $r_{amp}$ is set to -0.8. It is recommended that the full phase correction is used on most embodiments, such that and $r_{ph}$ is kept at -1, unless there is good reason to expect the true sea state reflectivity coefficient to be greater than -1. (A sea-state reflectivity value of -1 is for a perfect, negative polarity reflector. For an imperfect reflector, the sea-state reflectivity will increase to a value in the range -1 to 0.) Accordingly, in this particular embodiment and at this stage, $r_{ph}$ =-1, although a different value could be assigned later.

This particular embodiment also defines a subset of the marine seismic data on which to operate while designing the filter. This subset may be referred to as a "window", or a "spectral window". It is generally desirable to choose a shallow window where the highest signal bandwidth is present. It is easier to design a stable de-ghosting operator where the notch is visible. In one particular embodiment, the spectral window chosen is a shallow window.

Once the parameters are set to define the filter and extent of the test sample, an iteration is performed in which the filter is applied to the marine seismic data in the window. The result is displayed to the user 740, the display including the amplitude and phase corrections produced by the filter and the amplitude spectrum of the de-ghosted window. The result should be a linear, broadband spectrum after de-ghosting with optimal parameters.

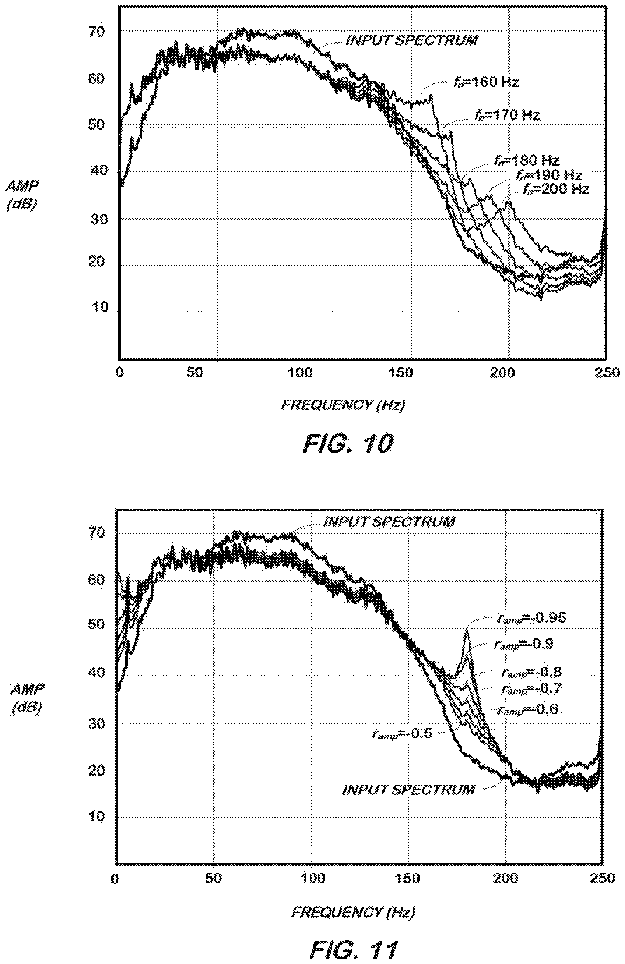

In the example under discussion, 190 Hz introduced an anomaly in the spectrum after de-ghosting, indicating that the notch frequency needed to be adjusted to stabilize this correction. This setup was iterated with several prospective notch frequencies to find one that best flattened the spectrum. Prospective notch frequencies of 160 Hz, 170 Hz, 180 Hz, and 200 Hz were also examined, as shown in Figure 10, before selecting 180 Hz because it provided the most desirable spectrum. There may be variation between what any individual user will consider the "most desired" spectrum, but each user will necessarily have an understanding of what they consider "most desired" or "desired". In general, however, most people in the art will consider the best flattened spectrum to be the "most desired". One measure of desirability is stability.

Once the notch frequency is chosen, the amplitude ghost reflection coefficient ($r_{amp}$) is fit to the data. In the example at hand, the initial guess of -0.8 used to define the notch frequency produced a small over-boosting of the spectrum around the notch frequency. Different values adjusting the strength of the amplitude correction were iterated through the data (using the already selected notch frequency) using $r_{amp}$ to determine which value best flattens the spectrum. In the present example, values of -0.5, -0.6, -0.7, -0.8, -0.9 and -0.95 were tested, as shown in Figure 11, before the value -0.7 was selected.

The filter designed as described immediately above is then applied to the entire set of the marine seismic data. The result is a set of minimum phase marine seismic data in which the effects of the source side ghost reflection have been suppressed. The process is then repeated to suppress the receiver side ghost, beginning with the design of the filter through the iterative application of the filter to the data. In the numerical example proffered, the filter for the receiver side ghost included a notch frequency of 200 Hz and $r_{amp}$=-0.7. The receiver side filter is then applied to the data in which the effects of the source side ghost have already been suppressed.

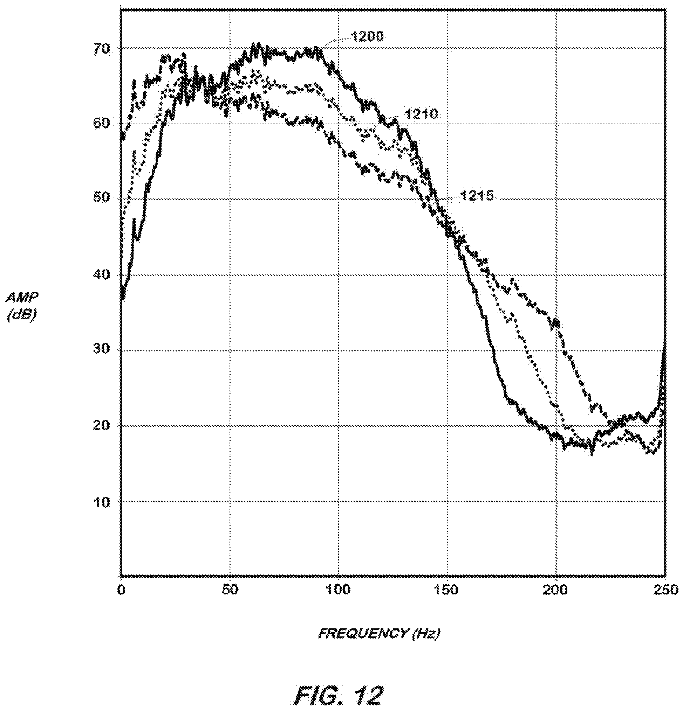

Figure 12 illustrates the effect of the process as applied to the input spectrum 1200 to suppress the effects of source side ghost to obtain a de-ghosted spectrum 1210. The de-ghosted spectrum is de-ghosted in the sense that the effects of the ghost reflection have been suppressed in the seismic record. Figure 12 also illustrates the effect of the process as applied to the input spectrum 1200 to suppress both the source side ghost reflection and the receiver side ghost reflection to obtain a de-ghosted spectrum 1215.

The result, then, is a set of minimum phase, marine seismic data in which both the effects of both the receiver side and source side ghosts have been suppressed. Note that, in embodiments where both are suppressed, it is immaterial whether the source side or the receiver side is processed first. Also, the embodiment herein uses different filters for the source side and the receiver side. Some embodiments may use the same filter on both sides, for example, when the source and receiver ghost effects occur at the same points in the frequency spectrum. These embodiments might also still use two filters but parameterize the filters at the same time by testing their joint impact on the data.

This particular embodiment also includes some optional, post-processing, such as zero phasing the de-ghosted dataset (at 825). Zero phasing (at 825) can be performed using techniques well known to the art. In one embodiment, the zero-phasing filter was designed using a far field signature derived by stacking the water bottom traces using a well-known, commercially available software package. However, any suitable technique may be used.

The workflow also includes band-pass filtering (at 830). Sometimes, in noisier parts of the data, the notch is beyond the useable bandwidth of the data. Sometimes it is overwhelmed by the impulse response of the 1D filter on the noise spectrum. Sometimes considerable low-frequency noise is boosted during de-ghosting It is prudent therefore to select the useable bandwidth of the data after de-ghosting. The illustrated embodiment applies a 0-8-130-170Hz Ormsby band-pass. A time-variant band-pass could instead be used, this is dependent on the data in use.

Finally, there is optional low frequency noise removal (at 835) and, ultimately, all processing is finished and the workflow outputs a SGS broadband TWT stack. The output data can then be used in the manner that data processed in ways known to the art are used.

Note that the embodiment discussed above removes (at 810) the zero phase operator to yield a set of stacked, minimum phase, marine seismic data on which the filter is designed. As discussed above, not all embodiments perform this step. For example, in some embodiments, it may be the case that the zero phase operator cannot be found. Some embodiments may therefore omit this step although it is generally considered that it will be performed where it can be.

This same embodiment also compensates only for amplitude and not for phase using the "best fit" approach. Such an amplitude-only embodiment might be applied when the zero-phasing operator is not available or the conventional processing has accurately corrected for the phase of the ghost. However, the best fit approach used in compensating for the amplitude can be readily extended to compensating for the phase by those in the art having the benefit of this disclosure.

As noted above, some embodiments may also incorporate "notch diversity" into the filter design. Notch diversity can be strongly present in flat towed streamers and is due to effects such as the 2D and 3D raypaths of the ghost. In embodiments incorporating notch diversity in the filter, the default "diversity" value is set to 10 Hz, it may be increased if one expects higher diversity (for example having observed notch variation in the pre-stack traces), or reduced (for example when de-ghosting narrow angle stacks) to improve the output, increasing the diversity parameter reduces the strength of the correction applied to successive order notches.

In all embodiments, one challenge in successful de-ghosting via processing is to ensure the de-ghosting operator is stable. To restrict the strength of the amplitude correction, an effective approach is to reduce the value of the reflection coefficient. The SGS technique allows the user to define the strength of the amplitude and phase corrections independently by adjusting separate amplitude and a phase reflectivity coefficients. The strength of the phase correction is controlled using the phase reflectivity parameter $r_{ph}$ and is generally recommended to be kept at -1. The strength of the amplitude correction is controlled using the amplitude reflectivity parameter $r_{amp}$ and is stable when set to values around -0.9 to -0.5. In conjunction with designing the notch frequency and diversity parameters for the filter, this ensures a stable de-ghosting is performed. Note in the SGS approach the reflection coefficient value may not represent the true sea surface reflectivity, but is chosen to stabilize the operator.

The technique disclosed and claimed herein therefore is a broadband processing technique designed to attenuate the sea-surface ghost reflection from post-stack reflectivity data. Broadband processing removes the sea-surface related ghost via processing data acquired and processed in ways known to the art instead of using a broadband acquisition solution. In the embodiments disclosed herein, SGS convolves the data trace-by-trace with a 1D de-ghosting operator, or filter, which the user designs interactively. It makes a simple assumption that the ghost response is uniform everywhere. SGS can be applied to any post-stack marine reflectivity dataset where a sea-surface ghost effect is present. It can be used on inverted volumes, or amplitude versus offset ("AVO") attribute volumes derived from reflectivity data. It can be used to suppress both the source and the receiver ghost.

However, it is not applicable to land data. SGS does not try to extend the bandwidth of data artificially. It will only account for the geophysical effect of the ghost reflection.

Other embodiments of the invention will be apparent to those skilled in the art from consideration of the specification and practice of the invention disclosed herein.

**Claims**

1. A computer-implemented method, the method comprising:

    designing a filter for suppressing the effect of a ghost reflection in a set of stacked, marine seismic data representative of a subterranean formation, the filter compensating for amplitude due to the presence of the ghost reflection separately from the phase due to the presence of the ghost reflection, the designing including:

       iteratively defining at least one parameter of the filter and applying the defined filter to the seismic data;
       evaluating each iteration of the filter's application to at least a subset of the seismic data; and
       selecting a defined filter from one of the evaluated iterations; and

    applying the filter to the seismic data to suppress the effect of ghost reflection.

2. The method of claim 1, wherein the stacked, marine seismic data are stacked, minimum phase, marine seismic data.

3. The method of claim 1, wherein the stacked, marine seismic data are stacked, zero phase, marine seismic data.

4. The method of claim 3, wherein the method further comprises removing the zero phase operator from the stacked, zero phase, marine seismic data to obtain stacked, minimum phase, marine seismic data prior to designing the filter.

5. The method of claim 1, wherein the parameter is at least one of the amplitude ghost reflection coefficient, the phase ghost reflection coefficient and the ghost notch frequency, wherein iteratively defining the parameter further includes defining at least a second one of the amplitude ghost reflection coefficient, the phase ghost reflection coefficient and the ghost notch frequency.

6. The method of claim 1, wherein iteratively defining the parameter further includes defining at least a second one of the amplitude ghost reflection coefficient, the phase ghost reflection coefficient and the ghost notch frequency.

7. The method of claim 1, wherein the parameter is the amplitude ghost reflection coefficient or the phase ghost reflection coefficient; and its value is between 0 and -1, inclusive.

8. The method of claim 1, wherein the water surface reflection coefficient is defined differently to compensate for the ghost reflection amplitude than it is to compensate for the ghost reflection phase.

9. The method of claim 1, where the ghost reflection is one of: a receiver side ghost or a source side ghost.

10. The method of claim 1, wherein the filter is defined as:

$$D_{SGS}(\omega) = \left| D\left(\omega, r = r_{amp}\right) \right| e^{i \arg\{D(\omega, r = r_{ph})\}}$$

where

$r_{amp} \equiv$ amplitude ghost reflection coefficient
$r_{ph} \equiv$ phase ghost reflection coefficient respectively;
$f_n \equiv$ notch frequency; and
$\omega \equiv$ angular frequency of the seismic signal.

11. The method of claim 10, wherein the filter accounts for notch diversity and is defined as:

$$D'_{SGS}(\omega) = \left| \frac{N}{N + \sum_a r_{amp} e^{-\frac{i\omega}{f_a}}} \right| e^{i \arg\left\{ \frac{N}{N + \sum_a r_{ph} e^{-\frac{i\omega}{f_a}}} \right\}}$$

where

$r_{amp} \equiv$ amplitude ghost reflection coefficient
$r_{ph} \equiv$ phase ghost reflection coefficient respectively;
$\omega \equiv$ angular frequency of the seismic signal;
$N \equiv$ the number of stacked traces; and
$f_a \equiv$ individual notch frequencies of the stacked traces.

12. The method of claim 1, wherein the filter accommodates notch diversity.

13. A computer-implemented process, comprising:

accessing a set of stacked, marine seismic data;
receiving at least one input parameter to a one-dimensional model of a ghost reflection, the model separating the amplitude and the phase of the ghost reflection;
applying the model using the input parameter to the seismic data to suppress the ghost reflection;
iterating the receipt of the input parameter and the application of the model;
receiving a selection for one of the input parameters from the iterative application of the model; and
applying the model using the selected input parameter to the seismic data to suppress the ghost reflection;
wherein the accessing, the applying, and the iterating, are performed by a processor.

14. The computer-implemented process of claim 13, wherein the stacked, marine seismic data are stacked, minimum phase, marine seismic data.

15. The computer-implemented process of claim 13, wherein:

the stacked, marine seismic data are stacked, zero phase, marine seismic data; and
the computer-implemented process further comprises removing the zero phase operator from the stacked, zero phase, marine seismic data to obtain stacked, minimum phase, marine seismic data prior to designing the model.

**Patentansprüche**

1. Computerimplementiertes Verfahren, wobei das Verfahren Folgendes umfasst:
Konstruieren eines Filters zum Unterdrücken des Effekts einer Geisterreflexion in einem Satz gestapelter, meeresseismischer Daten, die für eine unterirdische Formation repräsentativ sind, wobei das Filter eine Amplitude aufgrund des Vorhandenseins der Geisterreflexion getrennt von der Phase aufgrund des Vorhandenseins der Geisterreflexion kompensiert, wobei das Konstruieren Folgendes beinhaltet:

Iteratives Definieren von mindestens einem Parameter des Filters und Anwenden des definierten Filters auf die seismischen Daten;
Evaluieren jeder Iteration der Filteranwendung auf mindestens einen Teilsatz der seismischen Daten; und
Selektieren eines definierten Filters aus einer der evaluierten Iterationen; und
Anwenden des Filters auf die seismischen Daten, um den Effekt einer Geisterreflexion zu unterdrücken.

2. Verfahren nach Anspruch 1, wobei die gestapelten, meeresseismischen Daten gestapelte, minimalphasige, meeresseismische Daten sind.

3. Verfahren nach Anspruch 1, wobei die gestapelten, meeresseismischen Daten gestapelte, nullphasige, meeresseismische Daten sind.

4. Verfahren nach Anspruch 3, wobei das Verfahren ferner das Entfernen des nullphasigen Operators von den gestapelten, nullphasigen, meeresseismischen Daten umfasst, um gestapelte, nullphasige, meeresseismische Daten vor dem Konstruieren des Filters zu erhalten.

5. Verfahren nach Anspruch 1, wobei der Parameter mindestens einer von dem Amplitudengeisterreflexionskoeffizient, dem Phasengeisterreflexionskoeffizient und der Geister-Notchfrequenz ist, wobei das iterative Definieren des Parameters ferner das Definieren von mindestens einem zweiten von dem Amplitudengeisterreflexionskoeffizient, dem Phasengeisterreflexionskoeffizient und der Geister-Notchfrequenz beinhaltet.

6. Verfahren nach Anspruch 1, wobei das iterative Definieren des Parameters ferner das Definieren von mindestens einem zweiten von dem Amplitudengeisterreflexionskoeffizient, dem Phasengeisterreflexionskoeffizient und der Geister-Notchfrequenz beinhaltet.

7. Verfahren nach Anspruch 1, wobei der Parameter der Amplitudengeisterreflexionskoeffizient oder der Phasengeisterreflexionskoeffizient ist; und sein Wert zwischen O und einschließlich -1 liegt.

8. Verfahren nach Anspruch 1, wobei der Wasseroberflächenreflexionskoeffizient unterschiedlich definiert ist, um die Geisterreflexionsamplitude zu kompensieren als um die Geisterreflexionsphase zu kompensieren.

9. Verfahren nach Anspruch 1, wobei die Geisterreflexion eines von Folgendem ist: einem Empfängerseitengeist oder einem Quellseitengeist.

10. Verfahren nach Anspruch 1, wobei das Filter definiert ist als:

$$D_{SGS}(\omega) = \left| D(\omega, r = r_{amp}) \right| e^{i\arg\{D(\omega, r = r_{ph})\}}$$

wobei gilt:

$r_{amp} \equiv$ Amplitudengeisterreflexionskoeffizient
$r_{ph} \equiv$ Phasengeisterreflexionskoeffizient;
$f_n \equiv$ Notchfrequenz; und
$\omega \equiv$ Winkelfrequenz des seismischen Signals.

11. Verfahren nach Anspruch 10, wobei das Filter Notchdiversität berücksichtigt und definiert ist als:

$$D'_{SGS}(\omega) = \left| \frac{N}{N + \sum_a r_{amp} e^{-\frac{i\omega}{f_a}}} \right| e^{i\arg\left\{ \frac{N}{N + \sum_a r_{ph} e^{-\frac{i\omega}{f_a}}} \right\}}$$

wobei gilt:

$r_{amp}$ = Amplitudengeisterreflexionskoeffizient
$r_{ph} \equiv$ Phasengeisterreflexionskoeffizient;
$\omega$ = Winkelfrequenz des seismischen Signals;
N = die Zahl der gestapelten seismischen Spuren; und
$f_a$ = individuelle Notchfrequenzen der gestapelten Spuren.

12. Verfahren nach Anspruch 1, wobei das Filter der Notchdiversität Rechnung trägt.

13. Computerimplementierter Prozess, der Folgendes umfasst:

Zugreifen auf einen Satz gestapelter, meeresseismischer Daten;
Empfangen von mindestens einem Eingabeparameter für ein eindimensionales Modell einer Geisterreflexion, wobei das Modell die Amplitude und die Phase der Geisterreflexion trennt;
Anwenden des Modells unter Verwendung des Eingabeparameter auf die seismischen Daten, um den Effekt einer Geisterreflexion zu unterdrücken;
Iterieren des Empfangs des Eingabeparameters und der Anwendung des Modells;
Empfangen einer Selektion für einen von den Eingabeparametern von der iterativen Anwendung des Modells; und
Anwenden des Modells unter Verwendung des selektierten Eingabeparameters auf die seismischen Daten, um den Effekt einer Geisterreflexion zu unterdrücken;
wobei das Zugreifen, das Anwenden und das Iterieren durch einen Prozessor durchgeführt werden.

14. Computerimplementierter Prozess nach Anspruch 13, wobei die gestapelten, meeresseismischen Daten gestapelte, minimalphasige, meeresseismische Daten sind.

15. Computerimplementierter Prozess nach Anspruch 13, wobei:

die gestapelten, meeresseismischen Daten gestapelte, nullphasige, meeresseismische Daten sind; und
der computerimplementierte Prozess ferner das Entfernen des nullphasigen Operators von den gestapelten, nullphasigen, meeresseismischen Daten umfasst, um gestapelte, nullphasige, meeresseismische Daten vor dem Konstruieren des Modells zu erhalten.

**Revendications**

1. Procédé mis en œuvre par ordinateur, le procédé comprenant :
la conception d'un filtre destiné à supprimer l'effet d'une réflexion fantôme dans un ensemble de données sismiques marines sommées représentatives d'une formation souterraine, le filtre compensant l'amplitude due à la présence de la réflexion fantôme séparément de la phase due à la présence de la réflexion fantôme, la conception incluant :

la définition itérative d'au moins un paramètre du filtre et l'application du filtre défini aux données sismiques ;
l'évaluation de chaque itération de l'application du filtre à au moins un sous-ensemble des données sismiques ; et
la sélection d'un filtre défini à partir d'une des itérations évaluées ;
et l'application du filtre aux données sismiques pour supprimer l'effet de la réflexion fantôme.

2. Procédé selon la revendication 1, dans lequel les données sismiques marines sommées sont des données sismiques marines, à phase minimale, sommées.

3. Procédé selon la revendication 1, dans lequel les données sismiques marines sommées sont des données sismiques marines, à phase nulle, sommées.

4. Procédé selon la revendication 3, dans lequel le procédé comprend en outre l'élimination de l'opérateur de phase nulle des données sismiques marines, à phase nulle, sommées pour obtenir des données sismiques marines, à phase minimale, sommées avant la conception du filtre.

5. Procédé selon la revendication 1, dans lequel le paramètre est au moins un élément parmi le coefficient de réflexion fantôme d'amplitude, le coefficient de réflexion fantôme de phase, et la fréquence d'entaille fantôme, dans lequel la définition itérative du paramètre inclut en outre la définition d'au moins un deuxième élément parmi le coefficient de réflexion fantôme d'amplitude, le coefficient de réflexion fantôme de phase, et la fréquence d'entaille fantôme.

6. Procédé selon la revendication 1, dans lequel la définition itérative du paramètre inclut en outre la définition d'au moins un deuxième élément parmi le coefficient de réflexion fantôme d'amplitude, le coefficient de réflexion fantôme de phase, et la fréquence d'entaille fantôme.

7. Procédé selon la revendication 1, dans lequel le paramètre est le coefficient de réflexion fantôme d'amplitude ou le coefficient de réflexion fantôme de phase ; et sa valeur va de 0 à -1, inclus.

8. Procédé selon la revendication 1, dans lequel le coefficient de réflexion à la surface de l'eau est défini d'une manière différente pour compenser l'amplitude de réflexion fantôme de celle pour compenser la phase de réflexion fantôme.

9. Procédé selon la revendication 1, où la réflexion fantôme est l'un de : un fantôme côté récepteur ou un fantôme côté source.

10. Procédé selon la revendication 1, dans lequel le filtre est défini comme :

$$D_{SGS}(\omega) = \left| D\left(\omega, r = r_{amp}\right)\right| e^{i\arg\{D(\omega, r=r_{ph})\}}$$

où

$r_{amp} \equiv$ coefficient de réflexion fantôme d'amplitude
$r_{ph} \equiv$ coefficient de réflexion fantôme de phase respectivement ;
$f_n \equiv$ fréquence d'entaille ; et
$\omega \equiv$ fréquence angulaire du signal sismique.

11. Procédé selon la revendication 10, dans lequel le filtre tient compte de la diversité des entailles et est défini comme :

$$D'_{SGS}(\omega) = \left| \frac{N}{N + \sum_a r_{amp} e^{-\frac{i\omega}{f_a}}} \right| e^{i\arg\left\{\frac{N}{N + \sum_a r_{ph} e^{-\frac{i\omega}{f_a}}}\right\}}$$

où

$r_{amp} \equiv$ coefficient de réflexion fantôme d'amplitude
$r_{ph} \equiv$ coefficient de réflexion fantôme de phase respectivement ;
$\omega \equiv$ fréquence angulaire du signal sismique ;
$N \equiv$ le nombre de traces sommées ; et
$f_a \equiv$ fréquences d'entaille individuelles des traces sommées.

12. Procédé selon la revendication 1, dans lequel le filtre peut accueillir une diversité d'entailles.

13. Procédé mis en œuvre par ordinateur, comprenant :

l'accès à un ensemble de données sismiques marines sommées ;

la réception d'au moins un paramètre d'entrée à un modèle unidimensionnel d'une réflexion fantôme, le modèle séparant l'amplitude et la phase de la réflexion fantôme ;

l'application du modèle en utilisant le paramètre d'entrée aux données sismiques pour supprimer la réflexion fantôme ;

l'itération de la réception du paramètre d'entrée et l'application du modèle ;

la réception d'une sélection pour l'un des paramètres d'entrée de l'application itérative du modèle ; et

l'application du modèle en utilisant le paramètre d'entrée sélectionné aux données sismiques pour supprimer la réflexion fantôme ;

dans lequel l'accès, l'application, et l'itération, sont réalisés par un processeur.

14. Procédé mis en œuvre par ordinateur selon la revendication 13, dans lequel les données sismiques marines sommées sont des données sismiques marines, à phase minimale, sommées.

15. Procédé mis en œuvre par ordinateur selon la revendication 13, dans lequel :

les données sismiques marines sommées sont des données sismiques marines, à phase nulle, sommées ; et

le procédé mis en œuvre par ordinateur comprend en outre l'élimination de l'opérateur de phase nulle des données sismiques marines, à phase nulle, sommées pour obtenir des données sismiques marines, à phase minimale, sommées avant la conception du modèle.

**FIG. 1**

**FIG. 2**

**FIG. 3A**

**FIG. 3B**

**FIG. 4**
*(Prior Art)*

**FIG. 5**

*FIG. 6*

*FIG. 7*

800

805 — ACCESS TWT STACK (ZERO PHASE)

810 — REMOVE ZERO-PHASE OPERATOR (1D)

815 — RECEIVER DE-GHOSTING : APPLY 1D SGS DE-GHOSTING OPERATOR

820 — SOURCE DE-GHOSTING APPLY 1D SGS DE-GHOSTING OPERATOR

825 — BROADBAND ZERO-PHASING (1D)

830 — BANDPASS FILTERING

835 — LOW FREQUENCY NOISE REMOVAL

840 — OUTPUT SGS BROADBAND TWT STACK

FIG. 8

**FIG. 9**

*(Prior Art)*

FIG. 10

FIG. 11

*FIG. 12*

24

**REFERENCES CITED IN THE DESCRIPTION**

**Patent documents cited in the description**

- US 20060227659 A
- WO 2012154294 A
- US 7725266 B
- US 327524 A